Europäisches Patentamt

European Patent Office

Office européen des brevets

(19)

(11) Veröffentlichungsnummer: **0 308 394**
A2

(12) **EUROPÄISCHE PATENTANMELDUNG**

(21) Anmeldenummer: **88890236.8**

(22) Anmeldetag: **13.09.88**

(51) Int. Cl.⁴: **G 02 C 5/00**

(30) Priorität: **16.09.87 AT 2333/87**

(43) Veröffentlichungstag der Anmeldung:
**22.03.89 Patentblatt 89/12**

(84) Benannte Vertragsstaaten: **DE FR GB IT**

(71) Anmelder: **CONDOR-GÜRTEL Gesellschaft m.b.H.**
**Etrichstrasse 12**
**A-4600 Wels (AT)**

(72) Erfinder: **Zierer, Hermann**
**Trauneggsiedlung 4**
**A-4600 Wels (AT)**

**Krammer, Erich**
**Neinergutstrasse 23**
**A-4600 Wels (AT)**

(74) Vertreter: **Klein, Adam, Dipl.Ing.**
**Fasangasse 49**
**A-1030 Wien (AT)**

(54) **Brillengestell und Verfahren zu seiner Herstellung.**

(57) Die unmittelbaren Anlageteile (5) für Kopfpartien eines Brillenträgers werden an einem Brillengestell (1) mit einem Bezug (6) aus Leder oder dergleichen versehen, welcher an seinen Nahtkanten (12) stumpf aneinanderstoßend durch Verbügeln verklebt wird. Dazu wird der Bezug (6) vorerst an jeder Nahtstelle mit einem Materialüberschuß im Bereich von etwa 25% der Materialstärke aufgestellt und nach dem Einbringen des Klebstoffes durch thermisches Rückbügeln des Überschusses dieser gestaut, wodurch die Stirnseiten der Naht (12) zumindest annähernd parallel gestellt werden und die Naht stumpf geschlossen wird. Damit ergibt sich eine kaum sichtbare Verklebung, die gegen das Eindringen von Verschmutzungen sowie auch gegen mechanische Einflüsse weitgehend unempfindlich ist.

Fig. 1

**Beschreibung**

### Brillengestell und Verfahren zu seiner Herstellung

Die Erfindung betrifft ein Brillengestell, mit zumindest teilweise mit einem Bezug aus Leder, lederartigem Kunststoffmaterial, oder dergleichen, überzogenen Anlageteilen für Kopfpartien eines Brillenträgers, sowie ein Verfahren zur Herstellung eines Brillengestells, wobei zumindest ein Anlageteil für Kopfpartien eines Brillenträgers mit einem geklebten Bezug aus Leder, lederartigem Kunststoff oder dergleichen versehen wird.

Brillengestelle bzw. -fassungen der genannten Art sind bekannt, wobei insbesonders die Endteile der Seitenbügel sowie auch die Nasenstege mit verschiedenen hautfreundlichen Materialien überzogen werden, welche Hautreizungen an den Anlageflächen am Kopf eines Brillenträgers verhindern sollen. Zur Herstellung dieser Überzüge sind Verfahren bekannt geworden, bei denen die aneinanderstoßenden Seitenränder des Überzuges durch eine Naht verbunden werden, was eine umständliche Herstellung bedingt und einen hohen Arbeitsaufwand erfordert, was das Brillengestell sehr teuer macht. Abgesehen davon, daß diese Naht beim Tragen der Brille sehr störend sein kann, sind die beim Nähen gestochenen Löcher ein idealer Sammelplatz für Bakterien sowie ein Angriffspunkt für Feuchtigkeit, wodurch insbesonders ein Überzug aus Leder von innen her angegriffen wird.

Zur Vermeidung dieser Probleme sind Verfahren der eingangs genannten Art bekannt geworden, gemäß welchen eine überlappende Verklebung vorgenommen wird, die jedoch an der Überlappungsstelle nicht sehr gut hält, womit sich eine Angriffsfläche für mechanische Zerstörung der Verbindung sowie für das Eindringen von Feuchtigkeit ergibt. Davon abgesehen sind derartige Verklebungen im Hinblick auf die Form und Größe der Anlageteile eines Brillengestells praktisch nur in Handarbeit herstellbar, was die Anwendung von Kontaktkleber erfordert, der bei Klebstoffüberschuß zur Ablösung einer eventuellen Farbschichte führen kann.

Aufgabe der vorliegenden Erfindung ist es, ein Brillengestell bzw. ein Verfahren der eingangs genannten Art so zu verbessern, daß die oben angeführten Nachteile der bekannten derartigen Gestelle bzw. Verfahren vermieden werden und daß insbesondere auf einfache und auch maschinell durchführbare Weise Bezüge auf die Anlageteile des Brillengestells aufgebracht werden können, welche in mechanischer Hinsicht sowie auch im Hinblick auf Feuchtigkeit und Hygiene alle Anforderungen erfüllen.

Dies wird gemäß der vorliegenden Erfindung bei einem Brillengestell der eingangs genannten Art dadurch erreicht, daß der Bezug an dem bzw. den Anlageteil(en) mit seinen Nahtkanten stumpf aneinanderstoßend durch Verbügeln verklebt ist. Das erfindungsgemäße Verfahren zur Herstellung eines Brillengestells ist zur Lösung der gestellten Aufgabe dadurch charakterisiert, daß der Bezug an jeder Nahtstelle mit einem Materialüberschuß im Bereich von 20 bis 30%, vorzugsweise 25%, der Materialstärke aufgestellt wird, und daß nach Einbringen des Klebstoffes durch thermisches Rückbügeln des Überschusses dieser gestaut, die Stirnseiten der Naht zumindest annähernd parallel gestellt und die Naht geschlossen wird. Durch den Rückstau des Bezuges aus Leder, lederartigem Kunststoff oder dergleichen und durch das gleichzeitige Weiterbügeln schließt sich die Nahtstelle völlig, sodaß sie überhaupt nicht oder zumindest kaum sichtbar bleibt. Die innen liegenden Anlageteile selbst können aus Kunststoff, Metall, oder sonstigem, für Brillengestelle geeignetem Material bestehen, und können auch schwer verklebbar sein, da der Anlageteil ja vollkommen mit dem Bezug umschlossen wird. Bei dieser Art der Verklebung kann im Gegensatz zu einer überlappenden Verklebung jede Art von Klebstoff eingesetzt werden, was die Herstellung einfacher macht und die eingangs angesprochene Gefahr von oberflächlicher Materialbeschädigung ausschließt.

Das Brillengestell kann nach einer bevorzugten weiteren Ausgestaltung der Erfindung so ausgebildet sein, daß der Bezug aus einem, auf den einen Kern bildenden jeweiligen Anlageteil aufgelegten Deckblatt und einem von der Gegenseite mit rembordierten Kanten aufgelegten, mit Klebstoff versehenen und mit Wärme und Prägewerkzeugen rückgebügelten Überzug besteht. Damit ergibt sich ein Zweischichtverfahren, bei dem beim Aufbringen des Bezuges auf den Anlageteil von der der Anlagefläche am Kopf eines Brillenträgers abgewandten Seite her das Deckblatt und von der Gegenseite her der genannte Überzug mit dem Materialüberschuß aufgebracht wird. Die Kanten des Überzuges werden hochgezogen (rembordiert) und die entstehenden leichten Kanten an der Oberseite mit Wärme und Prägewerkzeugen rückgebügelt, sodaß auch abgerundete Kanten produziert werden können und völlig geschlossene Nähte resultieren, welche das Eindringen von Schweiß und Wasser an der Nahtstelle unmöglich machen.

Gemäß einer weiteren Ausbildung der Erfindung kann an der der Anlagefläche am Kopf eines Brillenträgers zugewandten Seite des Anlageteiles zwischen diesem und dem Überzug eine wasserdampfaufnehmende Zwischenlage angeordnet sein, wozu im erfindungsgemäßen Verfahren vor dem Aufbringen des Überzuges eine wasserdampfaufnehmende Zwischenlage an der der Anlagefläche zugewandten Seite des Anlageteiles angebracht wird. Bei diesem Dreischichtverfahren kann wiederum das Kernmaterial des Anlageteiles beliebig, beispielsweise Kunststoff, Metall usw., sein; es kann jede Art von Klebstoff eingesetzt werden und somit eine extrem feste und dauerhafte Verklebung erzielt werden.

Die Erfindung wird im folgenden noch an Hand der in der Zeichnung dargestellten Ausführungsbeispiele näher erläutert. Fig. 1 zeigt ein erfindungsgemäßes Brillengestell mit nach Art einer Explosionszeichnung separat eingezeichneten überzogenen Anlageteilen, Fig. 2 zeigt einen Querschnitt durch einen gemäß dem Stande der Technik überzogenen Anlageteil, Fig. 3 und Fig. 4 zeigen jeweils eine Variante eines überzogenen Anlageteiles eines erfindungsgemäßen Brillengestells und die Fig. 5 und Fig. 6 zeigen einen Querschnitt durch einen weiteren Anlageteil eines erfindungsgemäß ausgeführten Brillengestells in zwei verschiedenen Stadien des Herstellungsverfahrens.

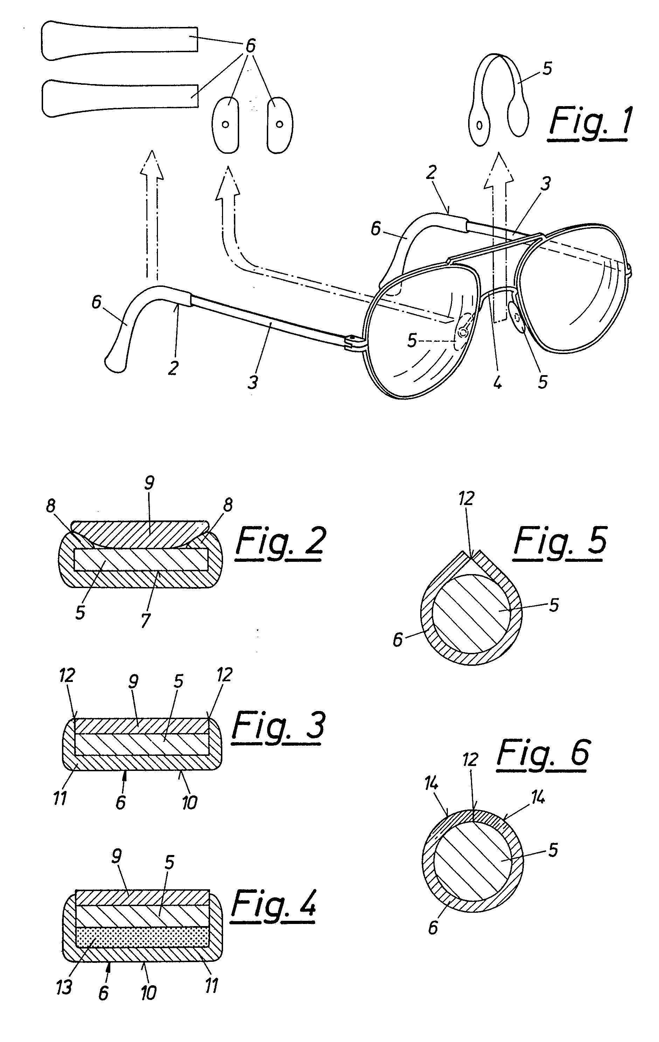

Das Brillengestell 1 nach Fig. 1 - dargestellt ist hier eine weitgehend rahmenlose Metallbrille; es könnte sich aber auch um eine Kunststoffbrille, Hornbrille usw., handeln - ist im Bereich der hinteren Enden 2 der Seitenbügel 3 sowie im Bereich des Nasensteges 4 mit einem Bezug aus Leder oder ähnlichem Material versehen, welcher damit die unmittelbar mit den entsprechenden Kopfpartien eines Brillenträgers hauptsächlich in Kontakt kommenden Teile des Brillengestells abdeckt. Der Nasensteg 4 kann dabei - wie am Brillengestell 1 selbst angebracht dargestellt -mit zwei separaten Anlageteilen 5 oder aber - wie in der Explosionsdarstellung in Fig. 1 oben angedeutet - mit einem einzelnen, für beide Seiten durchgehenden Anlageteil 5 ausgebildet sein. Von den Anlageteilen 5 am hinteren Ende 2 der Seitenbügel 3 ist nur der am in der Darstellung linken Seitenbügel dargestellt. Im linken oberen Bereich der Fig. 1 sind schließlich noch die Bezüge 6 der Anlageteile 5 unabhängig vom Brillenge stell 1 dargestellt.

Gemäß Fig. 2 war es nun bisher gemäß dem Stande der Technik bekannt und üblich den Anlageteil 5 von der Oberseite 7 - das wäre im vorliegenden Zusammenhang die der Anlagefläche am Kopf eines Brillenträgers zugewandte Seite des Anlageteiles 5 - her mit dünnem Leder oder ähnlichem Material zu umwickeln, und die offen bleibende Gegenseite, auf der die überlappenden Enden 8 sichtbar sind, mit einem nachfolgend aufgeklebten Deckblatt 9 zu verschließen. Damit ergibt sich allerdings eine geringe Haltbarkeit der Klebeverbindung, da Schweiß, Schmutz und Wasser an den Nahtstellen eindringen kann. Weiters können nur wenige Klebstoffarten verwendet werden.

Beim erfindungsgemmäßen Verfahren zur Herstellung des Brillengestelles bzw. des Bezuges 6 auf dem Anlageteil 5 wird nun gemäß Fig. 3 von der der Anlagefläche 10 am nicht dargestellten Kopf eines Brillenträgers abgewandten Seite her ein Deckblatt 9 und von der Gegenseite her ein Überzug 11 aufgebracht, der vorerst an den beiden Nahtstellen 12 einen Materialüberschuß im Bereich von etwa 25% der Materialstärke aufweist. Durch thermisches Rückbügeln dieses Materialüberschusses nach dem Einbringen des Klebstoffes wird der Überschuß und der angrenzende Bereich des Überzuges 11 gestaucht und die entsprechende Naht vollkommen geschlossen. Es ergibt sich damit ein rundum praktisch einheitlich mit Leder oder ähnlichem Bezugsmaterial umgebener Anlageteil, der am fertigen Brillengestell nicht nur gut aussieht sondern auch auf lange Zeit erhöhten Tragekomfort sicherstellt.

Bei der Ausführung gemäß Fig. 4 ist zusätzlich zu Fig. 3 vor dem Aufbringen des Überzuges 11 eine wasserdampfaufnehmende Zwischenlage 13 an der der Anlagefläche 10 am Kopf eines Brillenträgers zugewandten Seite des Anlageteiles 5 angebracht, was den Vorteil eines weiter erhöhten Tragekomfortes für den Brillenträger bietet. Außerdem sind bei dieser Ausführung, die den Bezug 6 vor dem Verbügeln zeigt, die aufgebogenen Seitenteile des Überzugs 11 kürzer ausgebildet, so daß die Kanten unterhalb vom oberen Rand des Deckblattes 9 abschließen. Durch entsprechende Formgebung des Weitezeuges wird dabei das Deckblatt 9, das hiebei den erforderlichen Materialüberschuß aufweist, an den Kanten rund zurückgebügelt, so daß praktisch der gleiche gute Abschluß erzielt wird wie bei der Ausbildung nach Fig. 3, wo der Überzug 11 kantengleich mit dem Deckblatt 9 abschließt.

In den Fig. 5 und 6 ist als weiteres Beispiel die Anbringung eines Bezuges 6 an einem runden Anlageteil 5 - beispielsweise am hinteren Ende 2 der Seitenbügel 3 - dargestellt. Gemäß Fig. 5 wird der Bezug an der Nahtstelle 12 mit einem Materialüberschuß im Bereich von 20 bis 30% der Materialstärke aufgestellt und dann nach dem Einbringen des Klebstoffes durch thermisches Rückbügeln des Überschusses die Naht 12 geschlossen. Die endgültige Form ist in Fig. 6 zu sehen; die Bereiche 14 deuten die Ausdehnung des Rückstaues durch das thermische Rückbügeln an. Ebenfalls aus Fig. 6 ist zu ersehen, daß die Stirnseiten des Bezuges 6 an der Naht 12 zumindest annähernd parallel gestellt sind, womit sich eine stumpfe Verklebung bzw. Verschweißung ergibt, die das Eindringen von Schmutz, Feuchtigkeit und dergleichen verhindert und eine geschlossene Außenfläche ergibt.

**Patentansprüche**

1. Brillengestell, mit zumindest teilweise mit einem Bezug aus Leder, lederartigem Kunststoffmaterial, oder dergleichen, überzogenen Anlageteilen für kopfpartien eines Brillenträgers, **dadurch gekennzeichnet,** daß der Bezug (6) an dem bzw. den Anlageteil(en) (5) mit seinen Nahtkanten stumpf aneinanderstoßend durch Verbügeln verklebt ist.

2. Brillengestell nach Anspruch 1, dadurch gekennzeichnet, daß der Bezug (6) aus einem, auf den einen Kern bildenden jeweiligen Anlageteil (5) aufgelegten Deckblatt (9) und einem von der Gegenseite mit rembordierten Kanten aufgelegten, mit Klebstoff versehenen und mit Wärme und Prägewerkzeugen rückgebügelten Überzug (11) besteht.

3. Brillengestell nach Anspruch 2, dadurch gekennzeichnet, daß an der der Anlagefläche (10) am Kopf eines Brillenträgers zugewandten Seite des Anlageteiles (5) zwischen diesem und dem Überzug (11) eine wasserdampfaufnehmende Zwischenlage (13) angeordnet ist.

4. Verfahren zur Herstellung eines Brillengestelles, wobei zumindest ein Anlageteil für Kopfpartien eines Brillenträgers mit einem geklebten Bezug aus Leder, lederartigem Kunststoff oder dergleichen versehen wird, **dadurch gekennzeichnet**, daß der Bezug (6) an jeder Nahtstelle (12) mit einem Materialüberschuß im Bereich von 20 bis 30%, vorzugsweise 25%, der Materialstärke aufgestellt wird, und daß nach Einbringen des Klebstoffes durch thermisches Rückbügeln des Überschusses dieser gestaut, die Stirnseiten der Naht (12) zumindest annähernd parallel gestellt und die Naht (12) geschlossen wird.

5. Verfahren nach Anspruch 4, dadurch gekennzeichnet, daß beim Aufbringen des Bezuges (6) auf den Anlageteil (5) von der der Anlagefläche (10) am Kopf eines Brillenträgers abgewandten Seite her ein Deckblatt (9) und von der Gegenseite her ein Überzug (11) mit dem Materialüberschuß aufgebracht wird.

6. Verfahren nach Anspruch 5, dadurch gekennzeichnet, daß vor dem Aufbringen des Überzuges (6) eine wasserdampfaufnehmende Zwischenlage (13) an der der Anlagefläche (10) zugewandten Seite des Anlageteiles (5) angebracht wird..

Fig. 1

Fig. 2

Fig. 3

Fig. 4

Fig. 5

Fig. 6